# EUROPÄISCHE PATENTANMELDUNG

(11) **EP 2 239 086 A1**
(43) Veröffentlichungstag der Anmeldung: **13.10.2010**
(21) Anmeldenummer: 09162726.5
(22) Anmeldetag: 15.06.2009
(51) Int. Cl.: B23K 26/24, B23K 26/32, C04B 37/02, F24J 2/26, F24J 2/46

(54) **Verfahren zum Laserverschweißen eines Verbundmaterials mit einem Bauteil sowie laserschweißbares Verbundmaterial für ein solches Verfahren**

(30) Priorität: 09.04.2009 DE 102009016805
(71) Anmelder: ALANOD Aluminium-Veredlung GmbH & Co. KG, 58256 Ennepetal (DE)
(72) Erfinder: Küster, Harald, 58332, Schwelm (DE); Peros, Dimitrios, 57074, Siegen (DE)
(74) Vertreter: Patentanwälte Dr. Solf & Zapf

(57) **Zusammenfassung**

Die Erfindung betrifft ein Verfahren zum Laserverschweißen eines Verbundmaterials (V) mit einem Bauteil (11), insbesondere zur Herstellung eines Solarkollektorelements (E), wobei das Verbundmaterial (V) einen bandförmigen, aus einem Metall mit hoher Reflektivität für Laserstrahlung bestehenden Träger (1) umfasst, der eine erste Seite (A) und eine zweite Seite (B) aufweist, wobei sich zumindest auf der ersten Seite (A) eine dielektrische Beschichtung (7) befindet, und wobei zur Herstellung einer Schweißnaht, ein Laserstrahl (L) in einem spitzen Orientierungswinkel (µ) zumindest auf die mit der dielektrischen Beschichtung (7) versehene erste Seite (A) des Trägers (1) projiziert wird. Zur Verbesserung der Energieeffizienz der eingesetzten Laserstrahlung wird vorgeschlagen, dass die keramische Beschichtung (7) eine Dicke (D_{B}) im Bereich von 140 nm bis 210 nm aufweist und der Laserstrahl (L) unter einem Orientierungswinkel (µ) im Bereich von 2° bis 50° eingestrahlt wird, derart, dass die eingestrahlte Energie des Laserstrahls (L) zu mindestens 15 Prozent absorbiert wird.

## Beschreibung

Die vorliegende Erfindung betrifft ein Verfahren zum Laserverschweißen eines Verbundmaterials mit einem Bauteil, insbesondere zur Herstellung eines Solarkollektorelements, wobei das Verbundmaterial einen bandförmigen, aus einem Metall mit hoher Reflektivität für Laserstrahlung bestehenden Träger umfasst, der eine erste Seite und eine zweite Seite aufweist, wobei sich zumindest auf der ersten Seite eine dielektrische Beschichtung befindet, und wobei zur Herstellung einer Schweißnaht ein Laserstrahl in einem spitzen Orientierungswinkel zumindest auf die mit der Beschichtung versehene erste Seite des Trägers projiziert wird.

Des Weiteren betrifft die Erfindung ein laserschweißbares Verbundmaterial zur Verwendung in einem derartigen Verfahren, umfassend einen bandförmigen, aus einem Metall mit hoher Reflektivität für Laserstrahlung bestehenden Träger, der eine erste und eine zweite Seite aufweist, wobei sich zumindest auf der ersten Seite eine dielektrische Beschichtung befindet.

Ein derartiges Verfahren zum Laserverschweißen sowie auch laserschweißbares Verbundmaterial sind aus dem europäischen Patent EP 1 217 315 B1 bekannt und haben sich in der Praxis bewährt. Die EP 1 217 315 B1 beschreibt dabei ein Solarkollektorelement, das insbesondere auf der Basis von beschichtetem Aluminiumband als Träger hergestellt ist, wobei darauf als Bauteil ein lasergeschweißtes Rohr für eine Wärmeträgerflüssigkeit befestigt ist. Im Detail beschreibt die EP 1 217 315 B1 ein Absorberteil, das auf einer ersten Seite mit dem Rohr verbunden ist. Das Absorberteil besteht aus dem Verbundmaterial, welches den metallischen Träger und ein auf einer zweiten Seite des Trägers befindliches optisch wirksamen Mehrschichtsystem umfasst.

Auf der dem optischen Mehrschichtsystem abgewandten, zu verschweißenden Seite des bandförmigen Trägers kann bekanntermaßen optional als dielektrische (keramische) Schicht eine Schicht aufgebracht sein, die aus anodisch oxidiertem oder elektrolytisch geglänztem und anodisch oxidiertem Aluminium besteht und auf nasschemischem Weg erzeugt werden kann. Die Poren der Aluminiumoxidschicht können dabei in der letzten Phase der nasschemischen Prozesskette weitestgehend durch eine Heißverdichtung verschlossen werden, so dass eine dauerhaft beständige Oberfläche entsteht. Die dielektrische Schicht soll einen mechanischen und korrosionshemmenden Schutz für den Träger bilden. Die Verbindung zwischen dem Absorberteil und dem insbesondere aus Kupfer bestehenden Rohr wird mittels eines Laserschweißverfahrens, insbesondere in einer Ausführung als Impulsschweißverfahren, realisiert. Das Laserschweißen ist ein Schmelzschweißverfahren, d. h. die zu verbindenden Teile werden unter Einwirkung der Laserstrahlung geschmolzen. Eine Besonderheit besteht dabei in der hohen Leistungsdichte und beim Impulsschweißen in der mit der kurzen Einwirkzeit verbundenen schnellen Abkühlung.

Wenn das Laserverschweißen ohne Zusatzstoff durchgeführt wird, besteht die entstehende stoffschlüssige Verbindung zwischen den beiden zu verbindenden Teilen nur aus den jeweiligen Werkstoffen des Absorberteils und des Rohres, wobei aufgrund des niedrigeren Schmelzpunktes des Aluminiums auf dem Absorberteil tropfenförmige erstarrte Schmelzkügelchen gebildet sind, die vorwiegend aus dem Material des Trägers und dem Material der sich auf der zu verschweißenden Seite befindlichen Beschichtung bestehen. Die Schmelzkügelchen bewirken die Überbrückung eines eventuell vorhandenen Spaltes bzw. Luftpolsters zwischen dem Absorberteil und dem Rohr.

Insbesondere können dabei das Rohr und das Absorberteil längs ihrer Stoßstelle durch beidseitig des Rohres verlaufende Schweißnähte verbunden sein, die aus voneinander beabstandeten, insbesondere regelmäßig angeordneten Schweißpunkten gebildet sind. Um diese Schweißnähte zu erzeugen, wird der Laserstrahl in den zwischen der Rohrwandung und der Oberfläche des Absorberteils gebildeten Zwickel gerichtet. Abgesehen von der konvexen Verrundung des Rohres bildet dieser Zwickel zwangsläufig einen spitzen Kontaktwinkel zwischen der Rohrwandung und der Oberfläche des Absorberteils. Folglich muss auch der Laserstrahl zur Herstellung der Schweißnaht in einem spitzen Orientierungswinkel zur Oberfläche des Absorberteils stehen.

Ein Laserverschweißen mit derartigen Winkelverhältnissen ist auch aus der US 6 300 591 B1 bekannt. In dem Dokument wird ein Laserschweißprozess beschrieben, durch den eine ebene metallische - jedoch im Gegensatz zur EP 1 217 315 B1 unbeschichtete - Oberfläche mit einer zylindrischen metallischen Oberfläche, insbesondere mit der eines Rohres, verbunden wird. Für den spitzen Kontaktwinkel, in dem die Rohrwandung zur ebenen Oberfläche steht, wobei diese bevorzugt - wie auch in der EP 1 217 315 B1 - an einem Absorberteil ausgebildet ist, wird dabei ein sich aufgrund der Geometrie des Rohres, insbesondere ein sich in Abhängigkeit von dessen durchmesserbedingter Krümmung, ergebender Wert des Kontaktwinkels und damit verbunden auch des Orientierungswinkels des Laserstrahls von jeweils weniger als etwa 45° als besonders bevorzugt genannt. Es wird ausgeführt, dass bei derartigen Winkelwerten natürlicherweise ein Keil gebildet wird, der eine Fokussierung der Strahlung und damit eine maximale Energieeintragung in die Schweißstelle bewirkt. Die Fokussierung soll dabei als eine sogenannte "Non-Image-Konzentration" erfolgen, d. h. ohne bilderzeugende Mittel, wie Linsen, nur aufgrund von Mehrfachreflexion der Strahlung an den Keilwänden. Hierzu müssen durch den Laserstrahl die ebene und die zylindrische Oberfläche gleichzeitig beaufschlagt werden, und die zu verschweißenden Körper müssen eine hohe Reflektivität aufweisen. Insbesondere werden diesbezüglich als geeignete Werkstoffe Kupfer und Aluminium sowie deren Legierungen beansprucht.

Das Phänomen der Strahlungskonzentration beruht dabei auf dem sogenannten Mendenhall-Keil-Effekt, welcher 1911 von Charles Elwood Mendenhall (1872-1935) beschrieben wurde - Mendenhall, C. E.: "On the emissive power of wedge shaped cavities and their use in temperature measurements", The Astrophysical Journal 33 (2), S. 91-97.

Eine solche Ausrichtung des Laserstrahles erfordert eine sehr präzise und daher aufwändige Justierung und kann insbesondere dann nicht realisiert werden, wenn mehrere eng nebeneinander liegende zylindrische Bauteile größeren Durchmessers mit dem ebenen Bauteil verschweißt werden sollen. Mit der erwähnten linsenlosen Konzentration der Laserstrahlung in einem keilförmigen engen Spalt beschäftigt sich auch die US 5 760 365. Hier werden als notwendigerweise einzusetzende hochreflektive Metalle solche mit einer Reflektivität von über 90 Prozent für die Laserstrahlung genannt.

Auch die DE 38 27 297 A1 hat die Verbesserung der Effizienz der Eintragung der Energie beim Fügen von Werkstücken mittels Laserstrahlung zum Gegenstand. Das Dokument bezieht sich auf eine Vorrichtung, die zum Laserverschweißen von Werkstücken dient, wobei wie in den beiden eingangs genannten Patentschriften mindestens eines der Werkstücke an der Fügestelle nach der Art eines Rohres vorzugsweise konvex gebogen ist. Die Laserstrahlung wird dabei im Wesentlichen parallel zu einer Fügespaltebene und im Wesentlichen senkrecht zu einer Fügelinie gerichtet eingestrahlt und ist überwiegend in einer einzigen Ebene polarisiert. Damit die zur Verfügung stehende Strahlungsleistung zum Fügen der Werkstücke effizienter genutzt werden kann, nämlich in einer auf deren Werkstoffe abgestimmten Weise, wird eine Laserstrahlung eingesetzt, die senkrecht zur Fügespaltebene polarisiert ist. Dies führt bei der vorgegebenen Fügegeometrie zu einer optimalen Energieabsorption, nämlich bei streifendem Einfall der Laserstrahlung in den Fügespalt zwischen den einander zugekehrten Werkstückflächen. In Ausgestaltung der beschriebenen technischen Lösung ist der Laserstrahl zumindest überwiegend auf nur eines der zu fügenden Werkstücke gerichtet. Demgemäss wird die vom Laserstrahl transportierte Energie unter Anwendung der senkrecht zur Spaltebene polarisierten Laserstrahlung auch in nur eines der beiden Werkstücke eingekoppelt, nämlich vorzugsweise in jenes, welches die höhere Schmelztemperatur hat und daher mehr Energie zum Aufschmelzen benötigt. Beispielhaft werden als Werkstoffe dabei Aluminium mit einer Schmelztemperatur von 600 °C und Stahl mit einer Schmelztemperatur von 1600 °C genannt. Beschichtungen sind nicht vorgesehen. Mittels der bekannten Vorrichtung bzw. des entsprechenden Verfahrens wird so das Fügen von Werkstücken, die aus unterschiedlichen Werkstoffen bestehen, erleichtert, sie setzt jedoch eine polarisierte Laserstrahlung voraus. Um den Laserstrahl streifenförmig auszubilden, werden optische Linsen und/oder Spiegel eingesetzt.

Gemäß der US 4 023 005, die sich ebenfalls mit der Laserverschweißung von Bauteilen aus für Laserstrahlung hoch reflektiven Materialen beschäftigt, ist vorgesehen, diese Bauteile mit einer mindestens 12,5 µm (0,0005 inch) dicken Auflage von niedrigreflektierenden Metallen zu überziehen. Insbesondere werden dabei Nickelschichten auf Kupfer sowie Palladiumschichten auf Silber oder Gold genannt. Die genannten metallischen Beschichtungsmaterialien sind teilweise teuer bzw. stellt auch teilweise der Beschichtungsvorgang einen erhöhten Aufwand dar.

Der vorliegenden Erfindung liegt die Aufgabe zugrunde, ein Verfahren der eingangs beschriebenen Art zum Laserverschweißen eines Verbundmaterials mit einem Bauteil sowie ein für dieses Verfahren geeignetes laserschweißbares Verbundmaterial der eingangs beschriebenen Art zu schaffen, wobei bei hoher Funktionalität und bei möglichst aufwandsarmer Herstellbarkeit des Verbundmaterials eine erhöhte Effizienz des Schweißprozesses erzielt werden soll.

Erfindungsgemäß wird dies für das Verfahren dadurch erreicht, dass die dielektrische Beschichtung eine Dicke im Bereich von 140 nm bis 210 nm aufweist und der bevorzugt fokussierte Laserstrahl - insbesondere unter einem Orientierungswinkel im Bereich von 2° bis 50° - auf das Verbundmaterial eingestrahlt wird, derart, dass die eingestrahlte Energie des Laserstrahls zu mindestens 15 Prozent absorbiert wird.

Dementsprechend wird dies für das Verbundmaterial erfindungsgemäß dadurch erreicht, dass die dielektrische Beschichtung eine Dicke im Bereich von 140 nm bis 210 nm derart aufweist, dass die Energie eines Laserstrahls, der unter einem vom Rohrdurchmesser und der Verbundmaterialdicke abhängigen, insbesondere im Bereich von 2° bis 50° liegenden Orientierungswinkel eingestrahlt wird, zu mindestens 15 Prozent absorbiert wird.

Allgemein teilt sich bei einem Objekt, auf das eine Strahlung auftrifft, - wie dies bei der beschichteten Oberfläche eines Absorberteils geschieht - diese Strahlung in einen reflektierten, einen absorbierten und einen transmittierten Anteil auf, die durch den Reflexionsgrad (Reflexionsvermögen), den Absorptionsgrad (Absorptionsvermögen) und den Transmissionsgrad (Transmissionsvermögen) des Objektes bestimmt werden. Während dielektrische Schichten, die mit einem metallischen Träger ein Verbundmaterial bilden, nicht zwangsläufig den Reflexionsgrad und den Absorptionsgrad des Materials wesentlich beeinflussen, beruht die Erfindung auf der überraschenden Erkenntnis, dass bei der erfindungsgemäßen Ausgestaltung des Verbundmaterials bzw. des Verfahrens die Energieabsorption eines Laserstrahls auf ein Mehrfaches gegenüber einer unbeschichteten oder auch nicht erfindungsgemäß beschichteten Trägeroberfläche angehoben werden kann.

Z. B. liegt die Energieabsorption eines Laserlichtes mit einer Wellenlänge von 1064 nm, das auf einen unbeschichteten Aluminiumträger projiziert wird, bei Orientierungswinkeln des Laserstrahls im Bereich von 20° bis 30° bei etwa 10 Prozent. Gleiches gilt ebenso für einen Aluminiumträger mit einer natürlichen Aluminiumoxidschicht einer Dicke von etwa 3 nm und auch für einen Aluminiumträger, auf den eine technische Aluminiumoxidschicht von etwa 100 nm oder auch 250 nm aufgebracht wurde. Wird jedoch gemäß der Erfindung beispielsweise eine 190 nm dicke Aluminiumoxidschicht als keramische Beschichtung auf den Träger aufgebracht, so kann vorteilhafterweise der Absorptionsgrad im gleichen Winkelbereich auf mindestens etwa den doppelten Wert erhöht werden.

Weitere vorteilhafte Ausführungen der Erfindung sind in den Unteransprüchen und in der nachfolgenden detaillierten Beschreibung enthalten.

Anhand eines durch die beiliegende Zeichnung veranschaulichten Ausführungsbeispiels wird die Erfindung näher erläutert. Dabei zeigen:
- Fig. 1: eine perspektivische Schnittdarstellung eines mittels des erfindungsgemäßen Verfahrens und mit dem erfindungsgemäßen Verbundmaterial herstellbaren Solarkollektorelements,
- Fig. 2: eine Draufsicht auf eine Ausführungsform eines in Fig. 1 dargestellten Solarkollektorelements mit mäanderförmiger Rohrführung,
- Fig. 3: im Vergleich mit nicht erfindungsgmäßen Materialien, eine grafische Darstellung des Absorptionsvermögens einer Ausführung des erfindungsgemäßen Verbundmaterials in Abhängigkeit von einem Einfallswinkel eines in einem erfindungsgemäßen Verfahren eingesetzten Laserstrahls,
- Fig. 4: im Vergleich mit nicht erfindungsgmäßen Materialien, eine grafische Darstellung des Reflexionsvermögens der Ausführung des erfindungsgemäßen Verbundmaterials gemäß Fig. 3 in Abhängigkeit vom Einfallswinkel des in einem erfindungsgemäßen Verfahren eingesetzten Laserstrahls,
- Fig. 5: im Vergleich mit nicht erfindungsgemäßen Materialien, eine grafische Darstellung des Absorptionsvermögens der Ausführung des erfindungsgemäßen Verbundmaterials gemäß Fig. 3 und 4 in Abhängigkeit von der Wellenlänge des Lichtes des im erfindungsgemäßen Verfahren eingesetzten Laserstrahls,
- Fig. 6: eine zur Herstellung eines Solarkollektorelementes bevorzugte Ausführung des erfindungsgemäßen Verbundmaterials im Querschnitt,
- Fig. 7: eine weitere Schnittdarstellung eines mittels des erfindungsgemäßen Verfahrens und mit dem erfindungsgemäßen Verbundmaterial herstellbaren Solarkollektorelements.

In den verschiedenen Figuren der Zeichnung sind dieselben Teile auch stets mit denselben Bezugszeichen versehen und werden daher in der Regel auch jeweils nur einmal beschrieben.

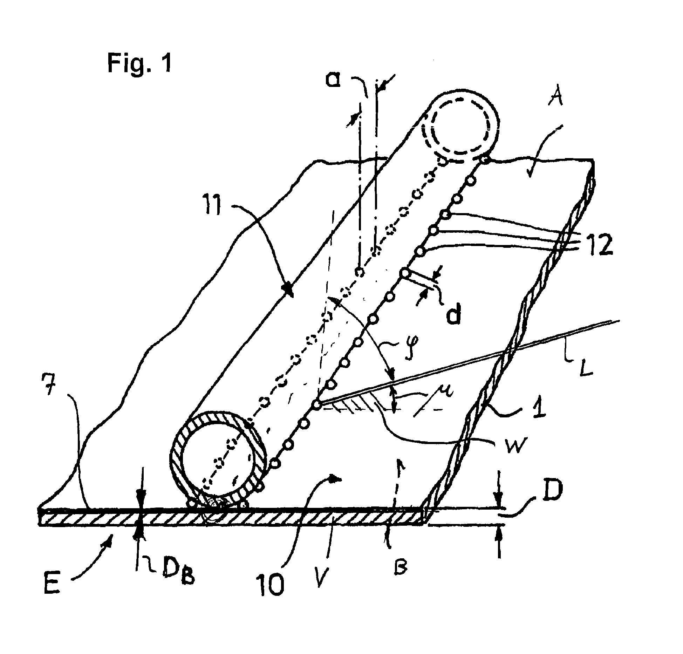

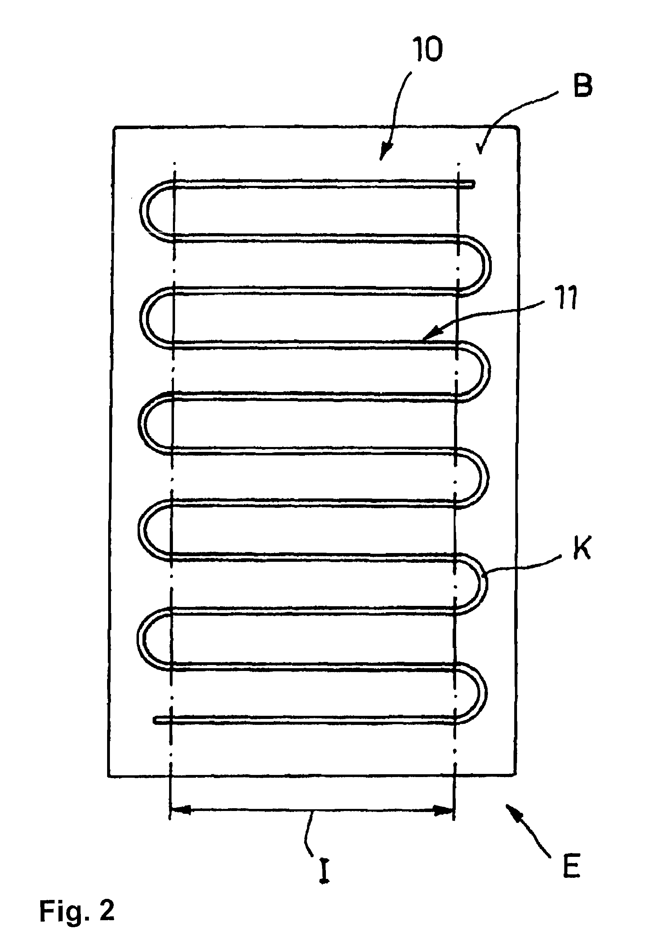

Fig. 1 und 2 veranschaulichen den Gesamtaufbau eines nach dem erfindungsgemäßen Verfahren und mit dem erfindungsgemäßen Verbundmaterial V herstellbaren Solarkollektorelementes E. Von dem Solarkollektorelement E sind in der Zeichnung gemäß Fig. 1 schematisiert ein Absorberteil 10 und ein Rohr 11 für eine Wärmeträgerflüssigkeit - als Beispiel für ein mit dem erfindungsgemäßen Verbundmaterial V zu verschweißendes Bauteil - dargestellt.

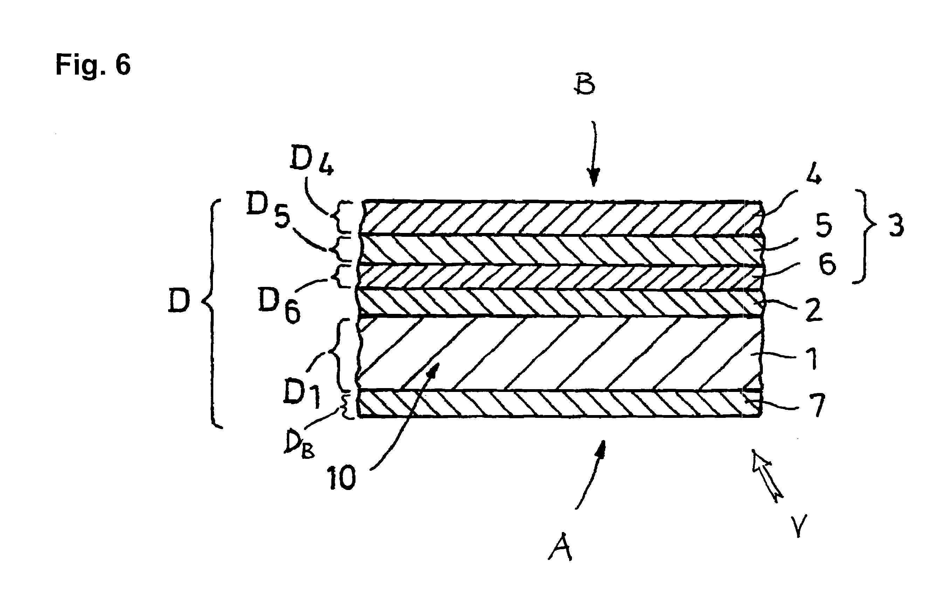

Das Absorberteil 10 besteht aus dem erfindungsgemäßen Verbundmaterial V, welches einen aus Aluminium - als Beispiel für ein Metall mit hoher Reflektivität für Laserstrahlung - bestehenden Träger 1 aufweist. Der Träger 1 hat eine erste Seite A und eine zweite Seite B. Auf dem Träger 1 befindet sich auf der zweiten Seite B - wie Fig. 6 zeigt - über einer Zwischenschicht 2 ein drei Schichten 4, 5, 6 umfassendes Mehrschichtsystem 3, das unter nachstehend noch genauer erläutert wird. Auf der ersten Seite A des Trägers 1 befindet sich eine keramische Beschichtung 7.

Mit Aluminiumband als Träger 1 stehen eine Vielzahl unterschiedlicher gewalzter Oberflächen zur Verfügung, insbesondere solche mit Rillenstruktur, die in vorteilhafter Weise als Absorberverbundmaterial die Winkelabhängigkeit des Absorptionsvermögens bei geeigneter Ausrichtung zum Sonnenlauf minimieren und homogenisieren können.

Durch das in umweltfreundlicher und kostengünstiger Weise herstellbare Absorberteil 10 wird eine hohe Lichtabsorption und Wärmeableitung an das Rohr 11 erreicht, wobei unter den thermisch stark beanspruchenden Betriebsbedingungen eines Kollektors eine vergleichsweise lange Lebensdauer gewährleistet werden kann. Zu Letzterem trägt auch die Art der Verbindung zwischen dem Absorberteil 10 und dem insbesondere aus Kupfer bestehenden Rohr 11 bei, die mittels des erfindungsgemäßen Laserschweißverfahrens, insbesondere in einer Ausführung als Impulsschweißverfahren, realisiert wird.

Das Laserschweißen ist ein Schmelzschweißverfahren, d. h. die zu verbindenden Teile werden unter Einwirkung eines fokussierten Laserstrahls L geschmolzen. Zur Erzeugung des Laserstrahls L kann beispielsweise ein Nd:YAG-Laser eingesetzt werden. Der Laserstrahl L wird dabei in einen spitzen Orientierungswinkel µ zur Oberfläche des Trägers 1 zumindest auf die mit der dielektrischen (keramischen) Beschichtung 7 versehene erste Seite A des Trägers 1 projiziert. Dadurch ist, zwischen dem Laserstrahl L und der Senkrechten - wie in Fig. 1 dargestellt - ein zweiter zu 90° komplementärer Einfallswinkel ϕ gebildet. Eine Projektion auf das Bauteil (Rohr 11) ist nicht erforderlich.

Insbesondere können das Rohr 11 und das Absorberteil 10 - wie dargestellt - längs ihrer Stoßstelle durch beidseitig des Rohres 11 verlaufende Schweißnähte verbunden werden, welche durch in einem Abstand a voneinander beabstandete, insbesondere regelmäßig angeordnete Schweißpunkte charakterisiert sind, die aus Schmelzkügelchen 12 gebildet sind.

Die Schmelzkügelchen 12 bewirken die Überbrückung eines eventuell vorhandenen Spaltes bzw. Luftpolsters zwischen dem Absorberteil 10 und dem Rohr 11. Damit eine optimale Verbindung entsteht, sollte die Leistungsdichte des Lasers beim Schweißen 10⁷ W/cm², vorzugsweise 10⁶ W/cm², nicht übersteigen. Die Gesamtenergie für einen Schweißpunkt sollte über einen Zeitraum von bis zu etwa 10 ms, vorzugsweise zeitlich unterteilt, einwirken. Dabei sind auch die tatsächliche räumliche und zeitliche Intensitätsverteilung der Laserstrahlung am Wirkort, insbesondere das mögliche Auftreten eines sogenannten "Spikings" oder sogenannter "Hot spots", zu beachten.

Da bei Betrieb eines Solarkollektors der Wärmeübergang vom Absorberteil 10 an das Rohr 11 vorwiegend an den Schweißpunkten erfolgt, bestimmen die Größe der Schmelzkügelchen 12 und der Abstand a zwischen den Schmelzkügelchen 12 den Kollektorwirkungsgrad entscheidend mit. Andererseits wirkt der Wärmewiderstand des Absorberteils 10 in dessen Erstreckungsebene limitierend auf den Kollektorwirkungsgrad. Dieser Wärmewiderstand des Absorberteils 10 wird dabei im Wesentlichen einerseits durch die Wärmeleitfähigkeit des erfindungsgemäßen Verbundmaterials V, vor allem die des Trägers 1, und andererseits durch eine Dicke D des Absorberteils 10 bzw. des Verbundmaterials V bestimmt.

Der optimale Abstand a zwischen den Schmelzkügelchen 12 richtet sich bei einem vorgegebenen Verbundmaterial des Absorberteiles 10 und fester Größe (Durchmesser d) der Schmelzkügelchen 12 somit nach dessen Dicke D. Bei einem Träger 1 aus Aluminium, einer Dicke D des Absorberteils 10 von etwa 0,3 bis 0,8 mm und einem Durchmesser d der Schmelzkügelchen 12 von etwa 0,2 bis 3,2 mm liegt dieser optimale Abstand a (Abstand der Mitten der Schmelzkügelchen 12) bei etwa 0,5 bis 2,5 mm. Je größer die Dicke D des Absorberteiles 10 ist, desto geringer muss der Abstand a zwischen den Schweißpunkten gewählt werden.

Das Rohr 11 kann insbesondere gerade oder, wie in Fig. 2 dargestellt, mäanderförmig auf dem Absorberteil 10 verlegt sein. Bei einer mäanderförmigen Verlegung kann sich die Verschweißung dabei auf gerade Rohrbereiche I beschränken, während gekrümmte Rohrbereiche K nicht verschweißt sind. Auch bei Rohren 11 größeren Durchmessers oder eng beieinander liegenden Rohren 11 kann das erfindungsgemäße Verfahren optimal eingesetzt werden, weil der Laserstrahl L unter einem Orientierungswinkel µ von bis zu 50° eingesetzt werden kann.

Das Verbundmaterial V kann bevorzugt als Coil mit einer Breite bis zu 1600 mm, vorzugsweise von 1250 mm, und mit einer Dicke D von etwa 0,1 bis 1,5 mm, vorzugsweise von etwa 0,2 bis 0,8 mm, zur Verarbeitung kommen, wobei das erfindungsgemäße Solarkollektorelement E daraus in einfacher Weise durch Ausstanzen eines plattenförmigen Absorberteils 10 und Verbindung desselben mit dem Rohr 11 herstellbar ist. Der Träger 1 des Verbundmaterials V kann dabei vorzugsweise eine Dicke D₁ von etwa 0,1 bis 0,7 mm besitzen.

Das Aluminium des Trägers 1 kann insbesondere eine höhere Reinheit als 99,0 % aufweisen, wodurch eine hohe Wärmeleitfähigkeit gefördert wird.

Für die Beschichtung 7 des Verbundmaterials V ist erfindungsgemäß vorgesehen, dass diese eine Dicke D_{B} im Bereich von 140 nm bis 210 nm derart aufweist, dass die Energie des Laserstrahls L, wenn er unter einem Orientierungswinkel µ im Bereich von 2° bis 50° eingestrahlt wird, zu mindestens 15 Prozent absorbiert wird. Entsprechend dem erfindungsgemäßen Verfahren wird der Laserstrahl L unter einem solchen Orientierungswinkel µ auch eingestrahlt. Der komplementäre Einfallswinkel ϕ liegt also zwischen 88° und 40°.

Bevorzugt zur Erzielung eines hohen Absorptionsgrades der Laserstrahlung ist es, dass die Beschichtung 7 eine Dicke D_{B} im Bereich von 170 nm bis 195 nm aufweist.

Die Beschichtung 7 kann im Wesentlichen aus Aluminiumoxid bestehen, wobei es sich im Sinne einer technologisch wenig aufwändigen Herstellungsweise, wenn der Träger 1 des erfindungsgemäßen Verbundmaterials V aus Aluminium besteht, um Aluminiumoxid handeln kann, das aus dem anodisch oxidiertem oder elektrolytisch geglänztem und anodisch oxidiertem Aluminium des Trägers 1 gebildet ist.

Da das Laserverschweißen des Absorberteils 10 mit dem Rohr 11 bevorzugt ohne Zusatzstoff durchgeführt wird, besteht die entstehende stoffschlüssige Verbindung zwischen den beiden zu verbindenden Teilen nur aus den jeweiligen Werkstoffen des Absorberteils 10 und des Rohres 11. Dabei bestehen aufgrund des niedrigeren Schmelzpunktes des Aluminiums und weil der Laserstrahl L erfindungsgemäß auch bevorzugt nur auf des Absorberteil 10, nicht auf das Rohr 11, gerichtet wird, die Schmelzkügelchen 12 vorwiegend aus einer Aluminiummatrix, in die Aluminiumoxidpartikel eingelagert sind. Hierdurch wird ein Compound mit besonders hoher Festigkeit erzielt. Prinzipiell ist es möglich, dass das Kupfer des Rohres 11 in das Aluminium und insbesondere das Aluminium des Trägers 1 in das Kupfer des Rohres 11 eindiffundiert ist. Durch die Präsenz des Aluminiumoxids wird dabei aber der Bildung von spröden, aus Kupfer und Aluminium bestehenden intermetallischen Phasen entgegengewirkt. Dies ist ein weiterer Vorteil dieser Ausführungsform der Erfindung.

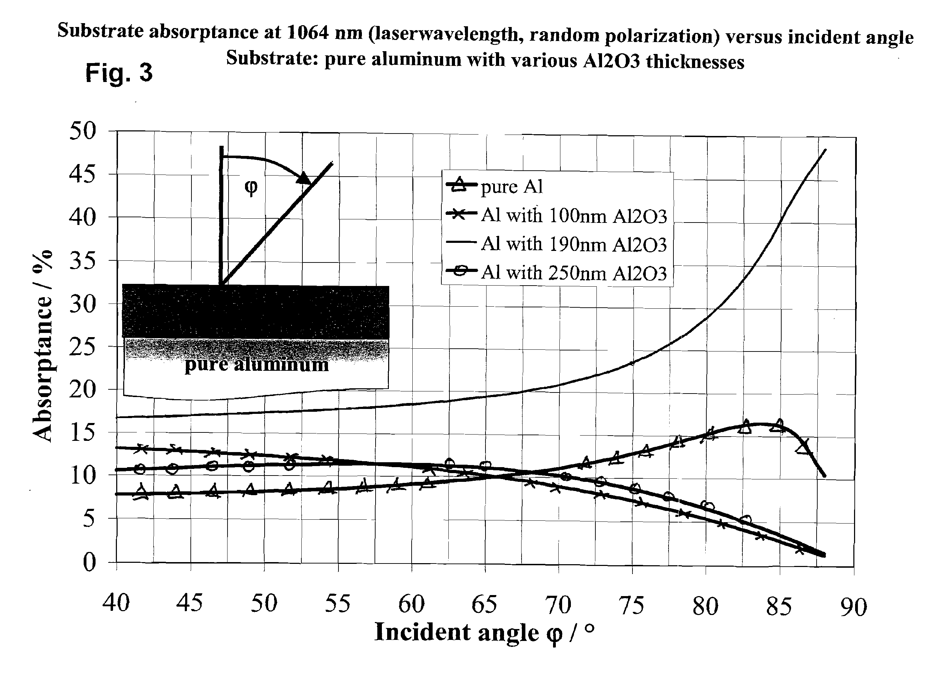

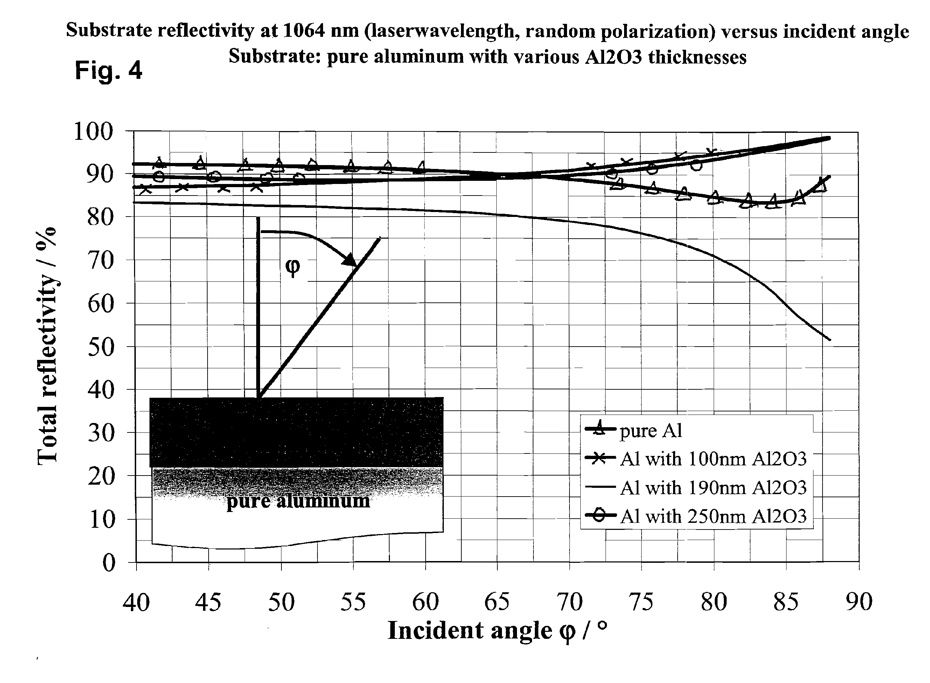

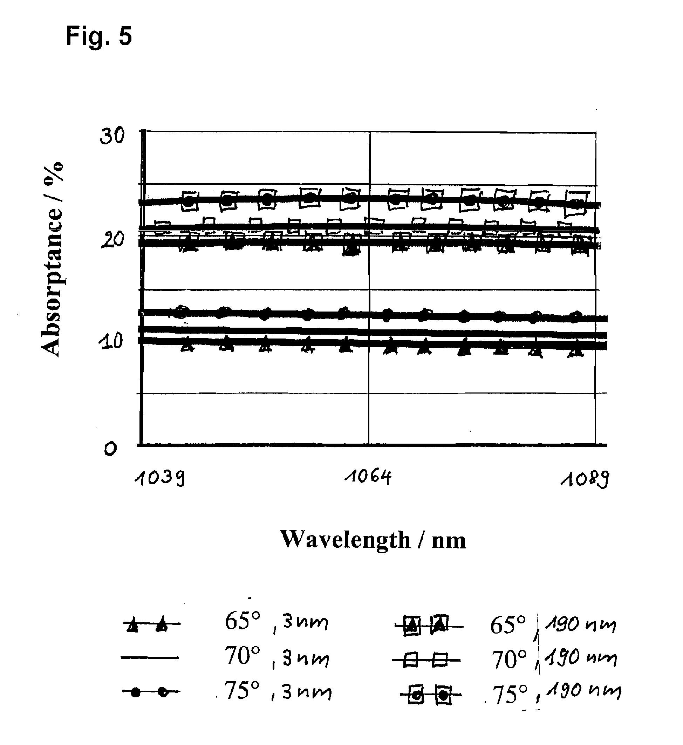

Wie bereits erwähnt, sind in Fig. 3 und 4 das Absorptionsvermögen (Absorptance) und das Reflexionsvermögen (Total reflectivity) einer Ausführung des erfindungsgemäßen Verbundmaterials V im Vergleich mit den Werten von nicht erfindungsgmäßen Materialien dargestellt. Die Kurven beziehen sich auf eine Laserwellenlänge von 1064 nm, wie sie für einen Nd:YAG-Laser charakteristisch ist. Die Polarisation des Laserstrahls L war zufallsverteilt. Für die Bestimmungen des Absorptions- und Reflexionsvermögens ist die Norm DIN 5036, Teil 3 verbindlich. Bei dem erfindungsgemäßen Verbundmaterial V, auf das in Fig. 3 und 4, sowie auch in Fig. 5, Bezug genommen wird, handelt es sich um ein solches, bei dem die keramische Beschichtung 7 eine Dicke D_{B} von 190 nm aufweist. Bei den nicht erfindungsgmäßen Materialien handelt es sich in Fig. 3 und 4 einerseits um einen Träger 1 ohne Beschichtung (pure aluminium) sowie andererseits um Verbundmaterialien, bei denen die keramische Beschichtung 7 einmal eine Dicke D_{B} von 100 nm und einmal eine Dicke D_{B} von 250 nm aufweist. In den grafischen Darstellungen ist jeweils die Abhängigkeit der genannten optischen Eigenschaften vom Einfallswinkel ϕ des eingesetzten Laserstrahls L im Bereich von 40° bis nahezu 90° dargestellt. Da die Transmission durch das Verbundmaterial gleich Null ist, sind die jeweiligen Kurvenverläufe in Fig. 3 und 4 zueinander komplementär, d. h. für einen bestimmten Winkelwert ϕ ergibt die Summe aus dem Absorptionsvermögen in Fig. 3 und dem Reflexionsvermögen in Fig. 4 immer 100 Prozent.

Zunächst verdeutlichen die Grafiken, dass es sich bei dem Aluminiumträger 1 um ein hochreflektives Material handelt. Die Werte der Reflexion liegen fast im gesamten Winkelbereich etwa gleichbleibend über 85 Prozent. Nur bei einem Einfallswinkel ϕ von etwa 83° gibt es ein geringfügig ausgebildetes Minimum von etwa 82 Prozent. Ebenso verhält es sich mit den Kurven der Verbundmaterialien, bei denen die keramische Beschichtung 7 einmal eine Dicke D_{B} von 100 nm und einmal eine Dicke D_{B} von 250 nm aufweist. Bei diesen Materialien steigt die Reflektivität in einem Winkelbereich über 70° sogar noch über die des reinen Aluminiums an. Das Absorptionsvermögen sinkt auf Werte von etwa 1 Prozent bei einem Einfallswinkel ϕ von etwa 87° ab.

Im gesamten Winkelbereich liegt das Absorptionsvermögen des erfindungsgemäßen Verbundmaterials V, bei dem die keramische Beschichtung 7 eine Dicke D_{B} von 190 nm aufweist, zum Teil mehrfach, über den Werten der nicht erfindungsgemäßen Materialien, bzw. die Reflektivität entsprechend unter deren Werten.

Bei dem in Fig. 5 wiedergegebenen Vergleich des Absorptionsvermögens eines erfindungsgemäßen Verbundmaterials V mit einem nicht erfindungsgemäßen Material bezieht sich die grafische Darstellung der erfindungsgemäßen Ausführung wiederum auf eine Ausführung, bei der die keramische Beschichtung 7 eine Dicke D_{B} von 190 nm aufweist. Bei dem nicht erfindungsgemäßen Material handelt es sich um ein solches, bei dem auf der Aluminiumoberfläche des Trägers 1 eine natürliche Oxidschicht von etwa 3 nm Dicke ausgebildet ist. In Fig. 5 ist das Absorptionsvermögen in Abhängigkeit von der Wellenlänge des Laserstrahls L im Bereich von 1039 nm bis 1089 nm für jeweils drei verschiedene Einfallswinkel ϕ (65°, 70°, 75°) dargestellt. Der Kurvenverlauf ist jeweils etwa konstant. Dies gilt auch bei einer nicht dargestellten Extrapolation nach unten bis zu etwa 960 nm und einer entsprechenden Extrapolation nach oben bis zu etwa 1170 nm. Es wird deutlich, dass gemäß der Erfindung Werte des Absorptionsvermögens erreicht werden, die etwa doppelt so hoch liegen wie bei einem Material mit natürlicher Aluminiumoxidschicht. Für die Effizienz der Energieausnutzung des Laserstrahls L bedeutet dies eine Steigerung des Wirkungsgrades um 100 Prozent.

Im Zusammenhang mit den grafischen Darstellungen in Fig. 3 bis 5 kann im Hinblick auf die Erfindung auch noch Folgendes festgestellt werden: In besonderer Bevorzugung kann vorgesehen sein, dass die keramische Beschichtung 7 eine Dicke D_{B} von weniger als 200 nm aufweist und der Laserstrahl L unter einem Orientierungswinkel µ im Bereich von 2° bis 22° eingestrahlt wird, derart, dass die eingestrahlte Energie des Laserstrahls L zu mindestens 20 Prozent, vorzugsweise zu mindestens 30 Prozent, absorbiert wird. Äußerst hohe Absorptionswerte sind möglich, wenn der Laserstrahl L unter einem Orientierungswinkel im µ Bereich von 7° bis 17° eingestrahlt wird.

Es war bereits erwähnt worden, dass sich bevorzugt auf dem Träger 1 auf der zweiten Seite B über einer Zwischenschicht 2 ein drei Schichten 4, 5, 6 umfassendes Mehrschichtsystem 3 befinden kann, wie dies in Fig. 6 dargestellt ist. Bei der Zwischenschicht 2, die sich auf der zweiten Seite B des Trägers 1 befindet, kann es sich mit Vorteil ebenfalls um eine keramische Beschichtung 2 handeln, insbesondere in technologisch vorteilhafter Weise um eine Beschichtung 2, die gleichartig wie die auf der ersten Seite A des Trägers 1 befindliche keramische Beschichtung 7 hergestellt ist.

So können beide Schichten 2, 7 beispielsweise gleichzeitig durch ein sogenanntes ANOX-Verfahren, also eine anodische Oxydation oder ein elektrolytisches Glänzen mit nachfolgender anodischer Oxydation des Aluminiums des Trägers 1 hergestellt werden. Es handelt sich dabei um ein nasschemisches Verfahren, wobei die Poren der Aluminiumoxidschichten in der letzten Phase der nasschemischen Prozesskette weitestgehend durch eine Heißverdichtung verschlossen werden können, so dass eine dauerhaft beständige Oberfläche entsteht. Die Schicht 7 auf der ersten Seite A des Trägers 1 bietet somit - wie auch die Zwischenschicht 2 - auch einen mechanischen und korrosionshemmenden Schutz für den Träger 1. Alternativ wäre auch eine Herstellung der keramischen Schichten 2, 7 als Sputterschichten möglich.

Von den drei Einzelschichten 4, 5, 6 des optisch wirksamen Mehrschichtsystems 3 können die beiden oberen Schichten 4, 5 oxidische Schichten sein und die unterste Schicht 6 eine auf die Zwischenschicht 2 aufgetragene metallische Schicht. Die oberste Schicht 4 des optischen Mehrschichtsystems 3 kann insbesondere eine siliciumoxidische Schicht der chemischen Zusammensetzung SiO_{y} sein. Die mittlere Schicht 5 kann eine chromoxidhaltige Schicht der chemischen Zusammensetzung CrOₓ sein, und die unterste Schicht 6 besteht bevorzugt aus Gold, Silber, Kupfer, Chrom, Aluminium und/oder Molybdän.

Die Indizes x, y bezeichnen dabei ein stöchiometrisches oder nichtstöchiometrisches Verhältnis des Sauerstoffs in den Oxiden zum oxidierten Stoff. Dieses stöchiometrische oder nichtstöchiometrische Verhältnis x kann vorzugsweise im Bereich 0 < x < 3 liegen, während das stöchiometrische oder nichtstöchiometrische Verhältnis y Werte im Bereich 1 ≤ y ≤ 2 annehmen kann.

Dadurch, dass die beiden oberen Schichten 4, 5 des optischen Mehrschichtsystems 3 Sputterschichten sein können, insbesondere durch Reaktivsputtern erzeugte Schichten, CVD- oder PECVD-Schichten oder durch Verdampfen, insbesondere durch Elektronenbombardement oder aus thermischen Quellen, erzeugte Schichten, ist es möglich, die Verhältnisse x, y ungestuft (also auch auf nichtstöchiometrische Werte der Indizes) einzustellen, wodurch die jeweiligen Schichteigenschaften variiert werden können.

Die oberste Schicht 4 des optischen Mehrschichtsystems 3 kann dabei mit Vorteil eine Dicke D₄ von mehr als 3 nm aufweisen. Bei dieser Dicke D₄ besitzt die Schicht bereits eine ausreichende Effizienz, wobei Zeit-, Material- und Energieaufwand jedoch nur geringe Werte annehmen. Ein oberer Grenzwert der Schichtdicke D₄ liegt unter diesem Gesichtspunkt bei etwa 500 nm. Ein für die mittlere Schicht 5 des optischen Mehrschichtsystems 3 unter den genannten Gesichtspunkten optimaler Wert ist eine minimale Dicke D₅ von mehr als 10 nm, maximal etwa 1 µm. Der entsprechende Wert für die unterste Schicht 6 liegt bei einer Dicke D₆ von mindestens 3 nm, maximal etwa 500 nm.

Die unterste Schicht 6 des optischen Mehrschichtsystems 3 sollte im Sinne einer hohen Effizienz bevorzugt eine höhere Reinheit als 99,5 % aufweisen. Die Schicht kann, wie bereits erwähnt, eine Sputterschicht oder eine durch Verdampfen, insbesondere durch Elektronenbombardement oder aus thermischen Quellen, erzeugte Schicht sein, so dass das gesamte optische Mehrschichtsystem 3 vorteilhafterweise aus in Vakuumfolge in einem kontinuierlichen Verfahren aufgetragenen Schichten 4, 5, 6 besteht.

Die unterste Schicht 6 des optischen Mehrschichtsystems 3 kann aus mehreren übereinander angeordneten Teilschichten aus Gold, Silber, Kupfer, Chrom, Aluminium und/oder Molybdän bestehen. Ein Aufbau aus Teilschichten ist auch für die oberste Schicht 4 und die mittlere Schicht 5 möglich.

Erfindungsgemäß ist es insbesondere möglich, den Schichtaufbau derart zu gestalten, dass ein nach DIN 5036, Teil 3 bestimmter Licht-Gesamtreflexionsgrad des optischen Mehrschichtsystems 3 auf der zweiten Seite B des Trägers 1 bevorzugt weniger als 5 % beträgt.

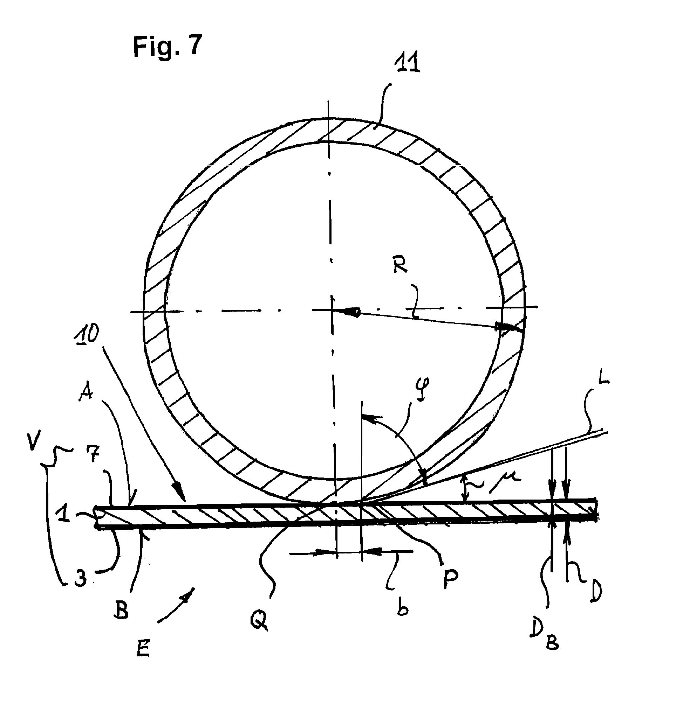

Die in Fig. 7 gezeigte, weitere Schnittdarstellung eines mittels des erfindungsgemäßen Verfahrens und mit dem erfindungsgemäßen Verbundmaterial V herstellbaren Solarkollektorelements E veranschaulicht weitere bevorzugte Details des erfindungsgemäßen Verfahrens. In dem Verfahren wird mit dem Laserstrahl L bevorzugt auf den Werkstoff mit der niedrigeren Schmelztemperatur, also im dargestellten Fall insbesondere auf das Verbundmaterial V, gezielt. Ein Auftreffpunkt P des Laserstrahls L liegt dabei in einem Abstand b entfernt von einem Tangentenpunkt Q, an dem das Absorberteil 10, insbesondere die keramische Beschichtung 7 des Verbundmaterials V, das Rohr 11 berührt. Der Auftreffpunkt P wird derart gewählt, dass genug Verbundmaterial V aus dem Absorberteil 10 aufgeschmolzen werden kann, um die Schmelzkügelchen 12 zu bilden. Diese Schmelzkügelchen 12 wachsen durch die Einwirkung des Laserstrahls L aus dem Absorberteil 10 säulenartig nach oben und überbrücken durch dieses Aufwachsen in Richtung des Rohres 11 eine Distanz, die zwischen dem Auftreffpunkt P und der Wandung des Rohres 11 besteht. Dabei wird die Schweißverbindung hergestellt. Ein optimaler Abstand b zwischen dem Auftreffpunkt P des Laserstrahls L und dem Tangentenpunkt Q liegt dabei vor, wenn der Abstand b nicht größer ist als 10 Prozent eines Radius R des Rohres 11. Beispielsweise sollte der Abstand b bei einem Radius R des Rohres 11 von 5 mm nicht größer sein als 0,5 mm.

Die vorliegende Erfindung ist nicht auf das dargestellte Ausführungsbeispiel beschränkt, sondern umfasst alle im Sinne der Erfindung gleichwirkenden Mittel und Maßnahmen. So ist es beispielsweise auch möglich, die keramische Beschichtung 7 aus einem anderen Material als Aluminiumoxid herzustellen.

Des Weiteren kann der Fachmann die Erfindung durch zusätzliche vorteilhafte Maßnahmen ergänzen, ohne dass der Rahmen der Erfindung verlassen wird. So kann der Absorptionsgrad an der Schweißstelle noch um weitere 4 bis 8 Prozent verbessert werden, wenn der Laserstrahl L nicht stochastisch, sondern in einer einzigen Ebene linear mit einer sogenannten p-Polarisation polarisiert ist. Der einfallende und der reflektierte Strahl L definiert dabei eine Einfallsebene, die senkrecht zur Grenzfläche von Verbundmaterial V und Bauteil 11 steht. Diese Einfallsebene ist in Fig. 1 mit dem Bezugszeichen W bezeichnet. Licht, dessen Polarisationsebene senkrecht zur Einfallsebene W liegt, heißt s-polarisiertes Licht und Licht, dessen Polarisationsebene parallel zur Einfallsebene W liegt, heißt p-polarisiertes Licht.

Ferner ist die Erfindung nicht auf die im Anspruch 1 definierte Merkmalskombination beschränkt, sondern kann auch durch jede beliebige andere Kombination von bestimmten Merkmalen aller insgesamt offenbarten Einzelmerkmale definiert sein. Dies bedeutet, dass grundsätzlich praktisch jedes Einzelmerkmal des Anspruchs 1 weggelassen bzw. durch mindestens ein an anderer Stelle der Anmeldung offenbartes Einzelmerkmal ersetzt werden kann. Insofern ist der Anspruch 1 lediglich als ein erster Formulierungsversuch für eine Erfindung zu verstehen.

### Bezugszeichen

- 1: Träger von V
- 2: Zwischenschicht, keramische Beschichtung von 1 auf B
- 3: optisches Mehrschichtsystem
- 4: oberste Schicht von 3
- 5: mittlere Schicht von 3
- 6: unterste Schicht von 3
- 7: keramische Beschichtung von 1 auf A
- 10: Absorberteil
- 11: Bauteil (Rohr)
- 12: Schmelzkügelchen

- A: erste Seite von V
- a: Abstand zwischen 12
- B: zweite Seite von V
- b: Abstand
- D: Dicke von V
- D₁: Dicke von 1
- D₄: Dicke von 4
- D₅: Dicke von 5
- D₆: Dicke von 6
- D_{B}: Dicke von 7
- E: Solarkollektorelement
- L: Laserstrahl
- P: Auftreffpunkt von L auf 10

- Q: Tangentenpunkt von 10 an 11
- R: Radius von 11
- V: Verbundmaterial
- W: Einfallsebene von L

- µ: Orientierungswinkel von L
- ϕ: Einfallswinkel von L

## Patentansprüche

1. Verfahren zum Laserverschweißen eines Verbundmaterials (V) mit einem Bauteil (11), insbesondere zur Herstellung eines Solarkollektorelements (E), wobei das Verbundmaterial (V) einen bandförmigen, aus einem Metall mit hoher Reflektivität für Laserstrahlung bestehenden Träger (1) umfasst, der eine erste Seite (A) und eine zweite Seite (B) aufweist, wobei sich zumindest auf der ersten Seite (A) eine dielektrische Beschichtung (7) befindet, und wobei zur Herstellung einer Schweißnaht, ein Laserstrahl (L) in einem spitzen Orientierungswinkel (p) zumindest auf die mit der Beschichtung (7) versehene erste Seite (A) des Trägers (1) projiziert wird,
**dadurch gekennzeichnet, dass** die dielektrische, insbesondere keramische Beschichtung (7) eine Dicke (D_{B}) im Bereich von 140 nm bis 210 nm aufweist und der bevorzugt fokussierte Laserstrahl (L) - insbesondere unter einem Orientierungswinkel (p) im Bereich von 2° bis 50° - auf das Verbundmaterial eingestrahlt wird, derart, dass die eingestrahlte Energie des Laserstrahls (L) zu mindestens 15 Prozent absorbiert wird.

2. Verfahren nach Anspruch 1,
**dadurch gekennzeichnet, dass** die Beschichtung (7) eine Dicke (D_{B}) im Bereich von 170 nm bis 195 nm aufweist.

3. Verfahren nach Anspruch 1 oder 2,
**dadurch gekennzeichnet, dass** der Laserstrahl (L) insbesondere unter einem Orientierungswinkel (p) im Bereich von 2° bis 30° auf das Verbundmaterial eingestrahlt wird.

4. Verfahren nach einem der Ansprüche 1 bis 3,
**dadurch gekennzeichnet, dass** die Beschichtung (7) eine Dicke (D_{B}) von weniger als 200 nm aufweist und der Laserstrahl (L) - insbesondere unter einem Orientierungswinkel (p) im Bereich von 2° bis 22° - derart eingestrahlt wird, dass die eingestrahlte Energie des Laserstrahls (L) zu mindestens 15 Prozent, vorzugsweise zu mindestens 30 Prozent, absorbiert wird.

5. Verfahren nach einem der Ansprüche 1 bis 4,
**dadurch gekennzeichnet, dass** der Laserstrahl (L) unter einem Orientierungswinkel im (p) Bereich von 7° bis 17° eingestrahlt wird.

6. Verfahren nach einem der Ansprüche 1 bis 5,
**dadurch gekennzeichnet, dass** der Laserstrahl (L) in einer einzigen Ebene linear polarisiert ist, vorzugsweise derart, dass sein Licht parallel zu einer Einfallsebene (W) liegt, die senkrecht zur Grenzfläche von Verbundmaterial (V) und Bauteil (11) steht.

7. Verfahren nach einem der Ansprüche 1 bis 6,
**dadurch gekennzeichnet, dass** die Beschichtung (7) im Wesentlichen aus Aluminiumoxid besteht.

8. Verfahren nach einem der Ansprüche 1 bis 7,
**dadurch gekennzeichnet, dass** der Träger (1) des Verbundmaterials (V) aus Aluminium besteht.

9. Verfahren nach den Ansprüchen 7 und 8,
**dadurch gekennzeichnet, dass** das Aluminiumoxid der Beschichtung (7) aus anodisch oxidiertem oder elektrolytisch geglänztem und anodisch oxidiertem Aluminium des Trägers (1) besteht.

10. Verfahren nach einem der Ansprüche 1 bis 9,
**dadurch gekennzeichnet, dass** das Bauteil (11) ein vorzugsweise aus Kupfer bestehendes Rohr (11) ist.

11. Verfahren nach einem der Ansprüche 1 bis 10,
**dadurch gekennzeichnet, dass** das Bauteil (11) und das Verbundmaterial (V) längs einer Stoßstelle des Bauteils (11) und des Verbundmaterials (V) durch beidseitig des Bauteils (11) verlaufende Schweißnähte verbunden wird, die jeweils insbesondere aus voneinander beabstandeten (Abstand a) Schmelzkügelchen (12) gebildet werden.

12. Verfahren nach einem der Ansprüche 1 bis 11,
**dadurch gekennzeichnet, dass** die Energie des Laserstrahls (L) zur Erzeugung eines Schmelzkügelchens (12) über einen Zeitraum von nicht mehr als etwa 10 ms einwirkt, wobei die Leistungsdichte des Laserstrahls (L) beim Schweißen vorzugsweise einen Wert von 10⁶ W/cm² nicht übersteigt.

13. Verfahren nach einem der Ansprüche 1 bis 12,
**dadurch gekennzeichnet, dass** sich auf der zweiten Seite (B) des Trägers (1) eine dielektrische, insbesondere keramische Beschichtung (2) befindet, die insbesondere gleichartig wie die auf der ersten Seite (A) des Trägers (1) befindliche keramische Beschichtung (7) hergestellt ist.

14. Verfahren nach einem der Ansprüche 1 bis 13,
**dadurch gekennzeichnet, dass** sich auf der zweiten Seite (B) des Trägers (1) eine optisch wirksame Beschichtung (3) befindet, die ein Mehrschichtsystem (3) ist, das aus mindestens drei Schichten (4, 5, 6) besteht, wobei in dem Mehrschichtsystem (3) eine oberste Schicht (4) eine dielektrische Schicht ist, eine mittlere Schicht (5) eine chromoxidhaltige Schicht ist, und eine unterste Schicht (6) aus Gold, Silber, Kupfer, Chrom, Aluminium und/oder Molybdän besteht.

15. Verfahren nach einem der Ansprüche 1 bis 14,
**dadurch gekennzeichnet, dass** ein Abstand (b) zwischen einem Auftreffpunkt (P) des Laserstrahls (L) und einem Tangentenpunkt (Q), an dem die keramische Beschichtung (7) des Verbundmaterials (V) das als Rohr (11) ausgebildete Bauteil (11) berührt, nicht größer ist als 10 Prozent eines Radius (R) des Rohres (11).

16. Laserschweißbares Verbundmaterial (V) zur Verwendung in einem Verfahren nach einem der Ansprüche 1 bis 15, umfassend einen bandförmigen, aus einem Metall mit hoher Reflektivität für Laserstrahlung bestehenden Träger (1), der eine erste Seite (A) und eine zweite Seite (B) aufweist, wobei sich zumindest auf der ersten Seite (A) eine dielektrische Beschichtung (7) befindet,
**dadurch gekennzeichnet, dass** die Beschichtung (7) eine Dicke (D_{B}) im Bereich von 140 nm bis 210 nm derart aufweist, dass die Energie eines bevorzugt fokussierten Laserstrahls (L), der insbesondere unter einem Orientierungswinkel (p) im Bereich von 2° bis 50° eingestrahlt wird, zu mindestens 15 Prozent absorbiert wird.

17. Verbundmaterial (V) nach Anspruch 16,
**dadurch gekennzeichnet, dass** die Beschichtung (7) eine Dicke (D_{B}) von weniger als 200 nm, vorzugsweise eine Dicke (D_{B}) im Bereich von 170 nm bis 195 nm, derart aufweist, dass die Energie eines Laserstrahls (L), der unter einem Orientierungswinkel (p) im Bereich von 2° bis 22° eingestrahlt wird, zu mindestens 20 Prozent absorbiert wird,

18. Verbundmaterial (V) nach Anspruch 16 oder 17,
**gekennzeichnet durch** die Merkmale des Kennzeichens eines oder mehrerer der Ansprüche 7 bis 9, 13 und/oder 14.
